# EUROPÄISCHE PATENTANMELDUNG

(11) **EP 0 542 027 A2**
(43) Veröffentlichungstag der Anmeldung: **19.05.1993**
(21) Anmeldenummer: 92118321.6
(22) Anmeldetag: 27.10.1992
(51) Int. Cl.: C09B 3/40, C09B 6/00, C09B 1/00, C09B 3/22

(54) **Küpenfarbstoffe**

(30) Priorität: 14.11.1991 DE 4137416
(71) Anmelder: BASF Aktiengesellschaft, D-67063 Ludwigshafen (DE)
(72) Erfinder: Niedenbrueck, Matthias, Dr., W-6703 Limburgerhof (DE); Patsch, Manfred, Dr., W-6706 Wachenheim (DE)

(57) **Zusammenfassung**

Küpenfarbstoffe (I) 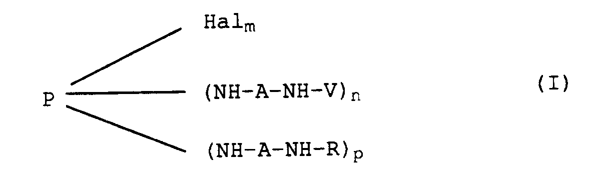
mit folgender Bedeutung der Substituenten:
P = Pyranthrongerüst; A = 1,4 - oder 1,5 Anthrachinonylenrest; V = Violanthronyl - oder Isoviolanthronylrest, der bis zu 2 Chlor - oder Bromatome als Substituenten tragen kann; R = H, Acylrest einer aliphatischen C₁ - C₆ - Carbonsäure oder Acyl - oder Sulfonylrest einer aromatischen Carbonsäure; Hal = CI oder Br; m = 0 bis 3; n = 1 bis 4; p = 0 bis 3, wobei die Summe m + n + p nicht größer als 4 ist; sowie Herstellung dieser Farbstoffe und ihre Verwendung zum Färben und Bedrucken von Cellulosematerial.

## Beschreibung

Die vorliegende Erfindung betrifft neue Küpenfarbstoffe der allgemeinen Formel (I) 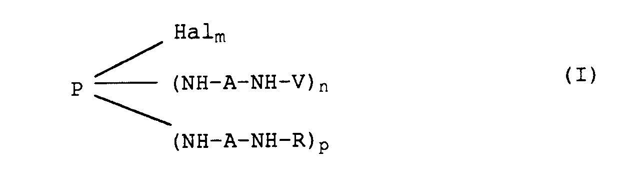
in welcher die Variablen folgende Bedeutung haben:
P ein Pyranthrongerüst;
A einen 1,4 - oder 1,5-Anthrachinonylenrest;
V einen Violanthronyl- oder Isoviolanthronylrest, der bis zu 2 Chlor- oder Bromatome als Substituenten tragen kann;
R Wasserstoff, den Acylrest einer aliphatischen C₁ - C₆ - Carbonsäure oder den Acyl- oder Sulfonylrest einer aromatischen Carbonsäure;
Hal Chlor oder Brom;
m 0 bis 3,
n 1 bis 4,
p 0 bis 3,

mit der Maßgabe, daß die Summe m + n + p nicht größer als 4 ist.

Weiterhin betrifft die Erfindung die Herstellung dieser Küpenfarbstoffe und ihre Verwendung zum Färben und Bedrucken von Cellulosematerial.

Farbstoffe, die zum Färben von Textilgut eingesetzt werden sollen, müssen sich sowohl durch hohe Licht- und Waschechtheit als auch durch hohe Farbstärke auszeichnen.

Zum Färben von cellulosehaltigem Textilmaterial werden vielfach Küpenfarbstoffe eingesetzt. Diese können unter anderem auf der Basis von Anthrachinon, Benzanthron oder höherkondensierten Ringsystemen wie Pyranthron aufgebaut sein.

Aus der US-A-1 1 994 136 und der EP-A-88 048 sind Küpenfarbstoffe bekannt, die durch Kondensation von halogenierten Violanthronen und Aminoanthrachinonen erhalten werden. In der D - RP - 471 040 sind Kondensationsprodukte von halogenierten Pyranthronen und Aminoanthrachinonen als Küpenfarbstoffe beschrieben.

Die mit diesen Farbstoffen erzielbaren Färbungen können jedoch entweder hinsichtlich der Reinheit ihrer Grautöne oder ihrer Echtheiten nicht überzeugen.

Der Erfindung lag daher die Aufgabe zugrunde, neue Küpenfarbstoffe bereitzustellen, mit denen Cellulosefasern mit hoher Farbstärke und guten Echtheiten in neutralen Grautönen gefärbt werden können.

Demgemäß wurden die eingangs definierten Küpenfarbstoffe (I) gefunden.

Weiterhin wurde ein Verfahren zur Herstellung dieser Küpenfarbstoffe gefunden, welches dadurch gekennzeichnet ist, daß man 1,4 - oder 1,5-Diaminoanthrachinon (II), halogeniertes Violanthron oder Isoviolanthron oder deren Gemische (III) und halogeniertes Pyranthron (IV) kondensiert und gegebenenfalls das erhaltene Kondensationsprodukt mit einem Acylierungs - oder Sulfonylierungsmittel umsetzt.

Außerdem wurde die Verwendung der Küpenfarbstoffe (I) zum Färben und Bedrucken von Cellulosematerial gefunden.

Bei den erfindungsgemäßen Küpenfarbstoffen (I) kann das Pyranthrongerüst bis zu 4, vorzugsweise mindestens 2 Substituenten tragen. Dabei muß mindestens ein Substituent einem mit Violanthron oder Isoviolanthron kondensierten Diaminoanthrachinon entsprechen.

Bevorzugt sind solche Farbstoffe (I), die Diaminoanthrachinon nur in mit Violanthron oder Isoviolanthron kondensierter Form enthalten (p = 0).

Für den Fall p + 0 ist die verbleibende Aminogruppe des Diaminoanthrachinons vorzugsweise durch Umsetzung mit einem Acylierungs- oder Sulfonylierungsmittel blockiert (d.h. R + Wasserstoff). Für diese Umsetzung kommen die üblicherweise eingesetzten Säurederivate in Betracht, insbesondere die Halogeni - de, vorzugsweise die Bromide und vor allem die Chloride, sowie die Anhydride von aliphatischen C₁ - C6 - Carbonsäuren und von aromatischen Carbonsäuren, wie Phenylessigsäure und vor allem Benzoesäure, und von aromatischen Sulfonsäuren, wie Benzolsulfonsäure und vor allem Toluolsulfonsäure, wobei die C-Gerüste dieser Säuren zusätzliche Substituenten, wie Methyl, Ethyl, Methoxy, Halogen, Hydroxy und Nitro, tragen können.

Geeignete Reste R sind beispielsweise Acetyl, Chloracetyl, Propionyl, Butyryl, Benzoyl, o - , m - und p - Chlorbenzoyl, m - und p - Nitrobenzoyl, o - und p - Hydroxybenzoyl, o -, m - und p - Methylbenzoyl, o -, m - und p - Methoxybenzoyl, Phenylacetyl, Benzolsulfonyl und o - und p - Toluolsulfonyl. Bevorzugt sind dabei p-Toluolsulfonyl und besonders Acetyl und Benzoyl.

Die Farbstoffe (I) sind erhältlich durch Kondensation von 1,4 - oder 1,5 - Diaminoanthrachinon (II) 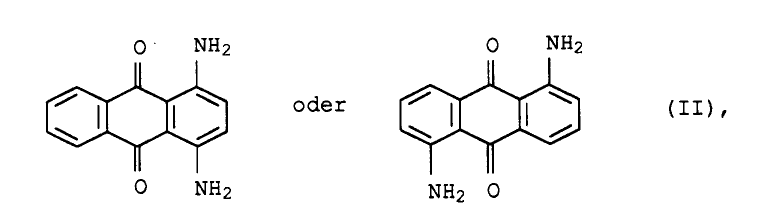
halogeniertem Violanthron oder Isoviolanthron oder deren Gemischen (III) mit einem bevorzugten Bromge - halt von 14 bis 36 Gew. - % oder mit einem Chlorgehalt von 7 bis 19 Gew. - % (entsprechend einem Halogengehalt von etwa 1 bis 3 mol pro mol Violanthron oder Isoviolanthron) 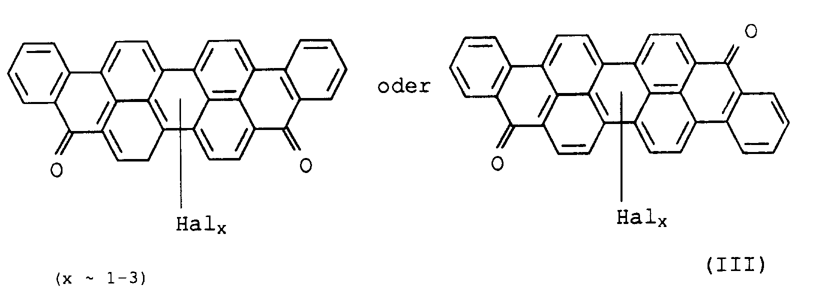
und halogeniertem Pyranthron (IV) mit einem bevorzugten Bromgehalt von 16 bis 45 Gew. - % oder einem bevorzugten Chlorgehalt von 8 bis 26 Gew. - % (entsprechend einem Halogengehalt von etwa 1 bis 4 mol pro mol Pyranthron) 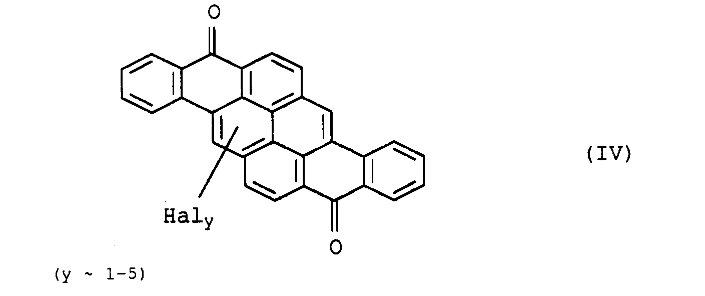
vorzugsweise in einem Molverhältnis von 4:4:1 bis 1:1:1.

Bevorzugte Komponente (III) ist dabei bromiertes Violanthron. Dieses kann in Form seines bei der Herstellung anfallenden Gemisches mit etwa 0,5 bis 10 % Isoviolanthron eingesetzt werden und muß nicht in aufwendiger Weise in Reinform dargestellt werden.

Besonders bevorzugte Farbstoffe (I) können durch Kondensation von Diaminoanthrachinon (II), bromiertem Violanthron (III) mit einem Bromgehalt von 14 bis 19 Gew. - % und bromiertem Pyranthron (IV) mit einem Bromgehalt von 35 bis 45 Gew. - % oder einem Chlorgehalt von 12 bis 16 Gew. - % in einem Molverhältnis von 2,5:2,5:1 bis 1,5:1,5:1 erhalten werden.

Das Molverhältnis der Komponenten (II) und (III) kann dabei durchaus von 1:1 abweichen, wobei sich das Gesamtmolverhältnis aller drei Komponenten jedoch innerhalb der oben angegebenen Grenzen bewegt.

Dies kann insbesondere dann der Fall sein, wenn die Farbstoffe (I) nicht in einem Schritt durch gleichzeitige Kondensation aller drei Komponenten, sondern zweistufig unter Bildung eines ersten Konden - sationsprodukts aus zwei Komponenten (a) (II) + (III) oder b) (II) + (IV)) und anschließende weitere Kondensation mit der jeweils verbleibenden Komponente hergestellt werden.

So werden bei der besonders günstigen Reaktionsfolge a) zunächst (II) und (III) vorzugsweise in einem Molverhältnis von 1,5:1 bis 1:1 kondensiert, und das erhaltene Primärprodukt wird dann vorzugsweise mit etwa 0,7 bis 0,4 mol (IV) pro mol vorgelegtes (II) umgesetzt. Enthält das eingesetzte Violanthron (III) mehr als ein Halogenatom, dann weicht das Molverhältnis von (II) zu (III) vorzugsweise nur geringfügig von 1:1 ab.

Im Fall eines Überschusses von (II) gegenüber (III) empfiehlt sich zur Blockierung der dann noch enthaltenen primären Aminogruppen die Umsetzung der erhaltenen Farbstoffe (I) mit einem der oben genannten Acylierungs - oder Sulfonylierungsmittel.

Die Ausgangsverbindungen (II), (III) und (IV) und ihre Herstellung sind allgemein bekannt und bei - spielsweise in den oben aufgeführten US-A-1 1 994 136, EP-A-88 048 und D-RP-471 040 beschrieben. Sie können direkt in der bei ihrer Synthese anfallenden Form eingesetzt werden und müssen nicht weiter gereinigt werden.

Die Reaktionsbedingungen des erfindungsgemäßen Verfahrens entsprechen den üblicherweise bei der Herstellung von Küpenfarbstoffen durch Kondensation von verküpbaren polycyclischen Verbindungen an - gewendeten und beispielsweise in der EP-A-119 956 beschriebenen Bedingungen.

So wird die Kondensation zweckmäßigerweise bei erhöhter Temperatur, in der Regel bei 160 bis 220 °C, vorzugsweise in Anwesenheit eines hochsiedenden inerten organischen Lösungsmittels, wie Nitro - benzol oder Benzoesäuremethylester, sowie in Gegenwart eines wasserlöslichen, säurebindenden Alkali - salzes, wie Natrium - oder Kaliumacetat oder Natrium - oder Kaliumcarbonat, und eines Katalysators aus Kupferpulver und/oder einer Kupferverbindung, wie Kupfer(I)chlorid, durchgeführt.

Der Kupfer-Katalysator kann dabei, wie in der EP-A-119 956 beschrieben, auch portionsweise während der Umsetzung zugegeben werden, wodurch sich der Gesamtbedarf auf vorteilhafte Weise erniedrigt.

Die Kondensationsdauer beträgt in der Regel 10 bis 36 Stunden.

Die Aufarbeitung des Reaktionsgemisches auf die Farbstoffe (I) kann man wie üblich vornehmen, und zwar vorzugsweise indem man das Lösungsmittel durch Wasserdampfdestillation entfernt, die Farbstoffe (I) durch Filtration abtrennt, mit heißem Wasser säure - und halogenidfrei wäscht und trocknet. Die anschlie - ßende Entkupferung kann durch Erhitzen in verdünnter Salzsäure erfolgen.

Sind in den Produkten (I) noch primäre Aminogruppen enthalten, so können diese vorteilhaft ohne vorherige Isolierung der Verbindungen (I) direkt in dem bei der Kondensation anfallenden Reaktionsgemisch in üblicher Weise acyliert oder sulfonyliert werden, wobei die Reaktionstemperatur, in der Regel Raum - temperatur bis etwa 150°C, auf das jeweilige Acylierungs - oder Sulfonylierungsmittel abzustimmen ist.

Die erfindungsgemäßen Küpenfarbstoffe (I) eignen sich vorteilhaft zum Färben und Bedrucken von Cellulosematerial, insbesondere von Baumwolle. Sie ergeben Färbungen in grauen bis schwarzen Tönen, die sich durch neutralen Farbton, hohe Farbstärke und gute Echtheiten besonders auszeichnen.

### Beispiele

### Herstellung und Anwendung von Küpenfarbstoffen (I)

### Beispiel 1

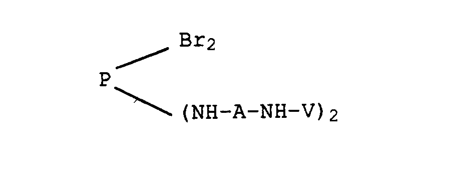

Eine Mischung von 76 g bromiertem Violanthron (15 Gew. - % Brom) und 37 g 1,4 - Diaminoanthrachi - non in 1 I Nitrobenzol wurde nach Zugabe von 15 g Natriumcarbonat und 3 g Kupferpulver auf 200 °C erhitzt. Nach 15 h wurden 61 g bromiertes Pyranthron (39 Gew. - % Brom), 17 g Natriumcarbonat und 3 g Kupferpulver zugegeben. Die Reaktionsmischung wurde dann noch weitere 15 h bei 200 ° gehalten.

Durch anschließende Wasserdampfdestillation wurde das Nitrobenzol aus dem Reaktionsgemisch entfernt. Der Farbstoff wurde durch Filtration abgetrennt, mit heißem Wasser gewaschen, durch Erhitzen in verdünnter Salzsäure entkupfert und getrocknet.

Es wurden 150 g Farbstoff mit einem Bromgehalt von 10,5 Gew. - % erhalten.

Anschließend wurde mit diesem Farbstoff eine Baumwollprobe gefärbt.

Dazu wurden 0,2 g (Graufärbung) bzw. 1 g (Schwarzfärbung) Farbstoff in 200 ml einer wäßrigen Lösung, die 6,6 ml Natronlauge 38 Be und 1,5 g Natriumdithionit enthielt, bei 25 °C 10 min verküpt.

In diese Küpe wurden 10 g Baumwolle gegeben. Innerhalb von 30 min wurde zunächst auf 60 °C und anschließend innerhalb von 15 min auf 80°C erhitzt. Dann wurde noch 30 min bei dieser Temperatur gefärbt.

Nach dem Abquetschen der Baumwolle wurde an der Luft oxidiert, und die Färbung wurde wie üblich fertiggestellt.

Die Baumwollprobe zeigte eine neutrale Grau - bzw. Schwarzfärbung mit jeweils sehr guten Echtheiten.

### Beispiel 2

### P-(NH -A- NH V)2

Eine Mischung von 21 g chloriertem Pyranthron (15 Gew. - % Chlor) und 22 g 1,4 - Diaminoanthrachinon in 1 I Nitrobenzol wurde nach Zugabe von 25 g Kaliumcarbonat und 5 g Kupferpulver auf 200 °C erhitzt. Nach 20 h wurden 48 g bromiertes Violanthron (15 Gew. - % Brom) und weitere 5 g Kupferpulver zugegeben. Die Reaktionsmischung wurde dann noch weitere 16 h bei 200 °C gehalten.

Die Isolierung des Farbstoffs und die Probefärbung erfolgten analog zu Beispiel 1.

Es wurden 62 g Farbstoff erhalten, der Baumwolle in grauen bis schwarzen Tönen färbte.

### Beispiel 3

### P-(NH -A- NH -V)4

Eine Mischung von 41 g bromiertem Pyranthron (39 Gew. - % Brom) und 49 g 1,4 - Diaminoanthrachinon in 1 I Nitrobenzol wurde nach Zugabe von 32 g Natriumcarbonat und 6 g Kupferpulver auf 200 °C erhitzt. Nach 8 h wurden zunächst 500 ml Nitrobenzol und anschließend 101 g bromiertes Violanthron (15 Gew. - % Brom), 15 g Natriumcarbonat und 6 g Kupferpulver zugegeben. Die Reaktionsmischung wurde dann noch weitere 15 h bei 200 °C gehalten.

Die Isolierung des Farbstoffs und die Probefärbung erfolgten analog zu Beispiel 1.

Es wurden 160 g Farbstoff mit einem Bromgehalt von 1,5 Gew. - % erhalten, der Baumwolle in grauen bis schwarzen Tönen färbte.

### Beispiel 4

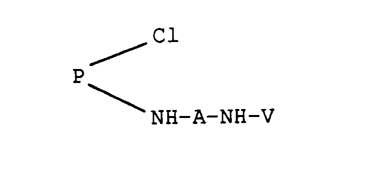

Eine Mischung von 71 g chloriertem Pyranthron (15 Gew. - % Chlor) und 81 g 1,4 - Diaminoanthrachi - non in 850 ml Nitrobenzol wurde nach Zugabe von 43 g Natriumcarbonat und 4 g Kupferpulver auf 200 °C erhitzt. Nach 20 h wurden zunächst 850 ml Nitrobenzol und anschließend 111 g bromiertes Violanthron (15 Gew. - % Brom), 15 g Natriumcarbonat und 3 g Kupferpulver zugegeben. Die Reaktionsmischung wurde dann noch weitere 15 h bei 200 °C gehalten.

Die Isolierung des Farbstoffs und die Probefärbung erfolgten analog zu Beispiel 1.

Es wurden 235 g Farbstoff mit einem Halogengehalt von 4,0 Gew. - % Chlor und 1,4 Gew. - % Brom erhalten, der Baumwolle in grauen bis schwarzen Tönen färbte.

## Patentansprüche

1. Küpenfarbstoffe der allgemeinen Formel (I) 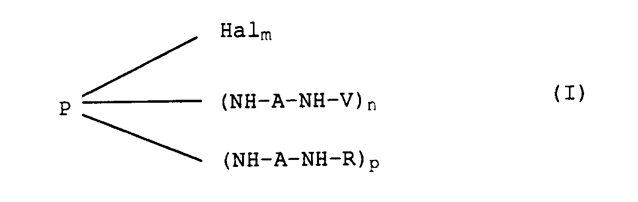
in welcher die Variablen folgende Bedeutung haben:
P ein Pyranthrongerüst;
A einen 1,4 - oder 1,5 -Anthrachinonylenrest;
V einen Violanthronyl - oder Isoviolanthronylrest, der bis zu 2 Chlor- oder Bromatome als Substituenten tragen kann;
R Wasserstoff, den Acylrest einer aliphatischen C₁ - C₆ - Carbonsäure oder den Acyl - oder Sulfonylrest einer aromatischen Carbonsäure;
Hal Chlor oder Brom;
m 0 bis 3,
n 1 bis 4,
p 0 bis 3,
mit der Maßgabe, daß die Summe m + n + p nicht größer als 4 ist.

2. Küpenfarbstoffe der allgemeinen Formel (I) nach Anspruch 1, erhältlich durch Kondensation von 1,4-oder 1,5 - Diaminoanthrachinon (II), halogeniertem Violanthron oder Isoviolanthron oder deren Gemi - schen (III) und halogeniertem Pyranthron (IV) und gegebenenfalls weitere Umsetzung des erhaltenen Kondensationsprodukts mit einem Acylierungs - oder Sulfonylierungsmittel.

3. Küpenfarbstoffe nach Anspruch 2, bei denen 1,4 - oder 1,5 - Diaminoanthrachinon (II), halogeniertes Violanthron oder Isoviolanthron oder deren Gemische (III) mit einem Bromgehalt von 14 bis 36 Gew. - % Brom oder einem Chlorgehalt von 7 bis 19 Gew. - % und halogeniertes Pyranthron (IV) mit einem Bromgehalt von 16 bis 45 Gew.-% oder einem Chlorgehalt von 8 bis 26 Gew.-% in einem Molverhältnis von 4:4:1 bis 1:1:1 kondensiert wurden.

4. Verfahren zur Herstellung von Küpenfarbstoffen der allgemeinen Formel (I) gemäß Anspruch 1, dadurch gekennzeichnet, daß man 1,4- oder 1,5-Diaminoanthrachinon (II), halogeniertes Violanthron oder Isoviolanthron oder deren Gemische (III) und halogeniertes Pyranthron (IV) kondensiert und gegebenenfalls das erhaltene Kondensationsprodukt mit einem Acylierungs - oder Sulfonylierungsmittel um - setzt.

5. Verfahren nach Anspruch 4, dadurch gekennzeichnet, daß man 1,4 - oder 1,5-Diaminoanthrachinon (II), halogeniertes Violanthron oder Isoviolanthron oder deren Gemische (III) mit einem Bromgehalt von 14 bis 36 Gew. - % oder einem Chlorgehalt von 7 bis 19 Gew. - % und halogeniertes Pyranthron (IV) mit einem Bromgehalt von 16 bis 45 Gew. - % oder einem Chlorgehalt von 8 bis 26 Gew. - % in einem Molverhältnis von 4:4:1 bis 1:1:1 kondensiert.

6. Verwendung der Küpenfarbstoffe der allgemeinen Formel (I) gemäß Anspruch 1 zum Färben und Bedrucken von Cellulosematerial.
